# EUROPEAN PATENT APPLICATION

(11) **EP 1 657 347 A1**
(43) Date of publication of application: **17.05.2006**
(21) Application number: 05108317.8
(22) Date of filing: 09.09.2005
(51) Int. Cl.: D06F 37/20, F16F 7/09

(54) **Washing machine**

(30) Priority: 10.11.2004 KR 2004091469
(71) Applicant: Samsung Electronics Co., Ltd., Suwon-si, Gyeonggi-Do (KR)
(72) Inventor: Na, Gyu Sung, Gyeonggi-do (KR); Kim, Hyung Gyoon, Suwon-si Gyeonggi-do (KR); Ko, Hong Seok, Gyeonggi-do (KR)
(74) Representative: Grey, Ian Michael

(57) **Abstract**

A washing machine comprising a housing (10), a tub (11) suspended within the housing and a damper (20) disposed between the housing and the tub and including a piston (22) slidable within a cylinder (21) to absorb vibration of the tub. The piston (22) includes a first portion (22a) and, a second portion (22b) connected to a remote end of the first portion (22a) within the cylinder (21) by an elastic member (22c) such that at least some vibration of the tub is absorbed by the elastic member (22c) prior to movement of the second portion (22b) of the piston (22) within the cylinder (21).

## Description

The present invention relates to a washing machine comprising a housing, a tub suspended within the housing and a damper disposed between the housing and the tub and including a piston slidable within a cylinder to absorb vibration of the tub.

A drum-type washing machine is generally used to wash laundry. Laundry is received in a cylindrical rotating tub which is rotated so that the laundry is raised and is subsequently dropped, such that it is washed by virtue of the impact applied thereto when the laundry falls.

A conventional drum-type washing machine is disclosed in Japanese Patent Laid-Open No. 2000-237490. This apparatus comprises an external housing, a cylindrical water tub installed in the housing and configured to contain water therein, and a cylindrical rotating drum installed in the water tub. The drum is configured such that it rotates due to the driving force of a drive motor mounted in a lower region of the housing. A plurality of through-holes are perforated through a circumferential wall of the drum for the in-flow or out-flow of water.

Suspension springs are provided on the upper side of the water tub to elastically support the water tub in a suspended state inside the housing. Furthermore, damper units are provided on the lower side thereof to support the water tub and act as shock absorbers to reduce the transmitted vibration generated during the operation of the washing machine.

Each damper unit comprises a circular hollow cylinder, a piston having one end reciprocably received inside the cylinder, and one or more frictional pads disposed around the outer surface of the piston to come into frictional contact with the inner surface of the cylinder, wherein each damper is configured to reduce the vibration transmitted from the water tub by emitting the energy transmitted thereto in the form of heat.

A disadvantage of the aforementioned conventional drum-type washing machine is that if a low degree of vibration is generated in the drum as the drum rotates at a high speed, the vibration is entirely transmitted to the housing due to the frictional force acting between the frictional pad and the inner surface of the cylinder.

The present invention seeks to provide a washing machine which overcomes or substantially alleviates the problems discussed above.

A washing machine according to the present invention is characterised in that the piston includes a first portion and, a second portion connected to a remote end of the first portion within the cylinder by an elastic member such that at least some vibration of the tub is absorbed by the elastic member prior to movement of the second portion of the piston within the cylinder.

Preferably, at least one frictional element is disposed between the second portion of the piston and the cylinder.

Advantageously, the second portion of the piston has at least one groove therein to receive the frictional element.

Conveniently, the frictional element is annular.

In one embodiment, at least one frictional element is disposed between the first portion of the piston and the cylinder.

Embodiments of the invention will now be described, by way of example only, with reference to the accompanying drawings, in which:
Figure 1 is a perspective view of a drum-type washing machine in accordance with the present invention;
Figure 2 is a sectional view of a damper unit included in the drum-type washing machine in accordance with a first embodiment of the present invention;
Figure 3 is a sectional view of a damper unit included in the drum-type washing machine in accordance with a second embodiment of the present invention; and

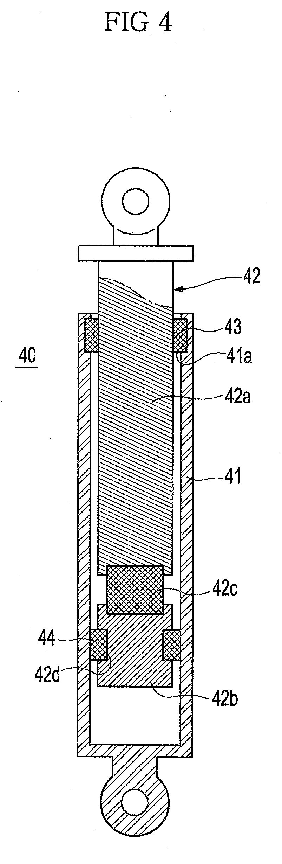

Figure 4 is a sectional view of a damper unit included in the drum-type washing machine in accordance with a third exemplary embodiment of the present invention.

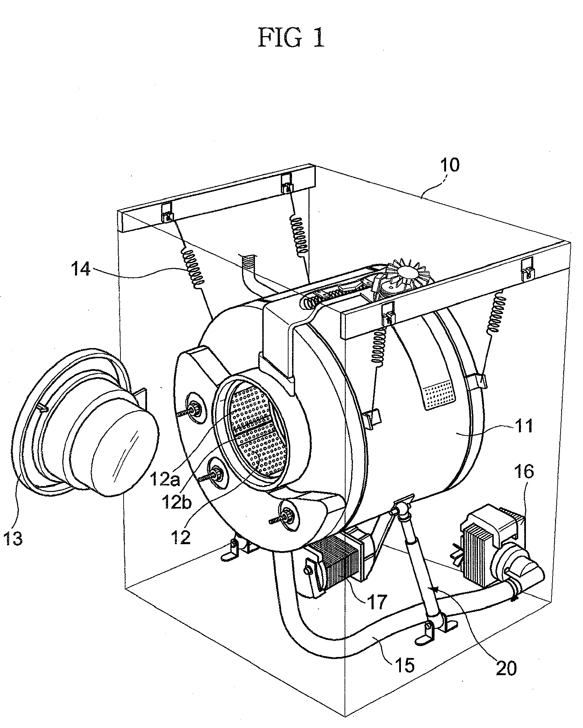

Referring to the drawings, there is shown in Figure 1 a drum-type washing machine comprising an external housing 10, a cylindrical water tub 11 installed in the housing 10 configured to contain water, and a cylindrical drum 12 mounted for rotation within in the water tub 11.

The water tub 11 and the drum 12 each have an opening through their front sides to allow laundry to be placed into, or removed from, the drum 12. A door 13 is hinged on the front side of the housing 10 such that the openings of the water tub 11 and the drum 12 can be opened or closed.

The water tub 11 is suspended in the housing 10 by means of at least one suspension spring 14 coupled to the upper side of the water tub 11 to elastically support the water tub 11. A drainage pipe 15 and a drainage pump 16 are mounted to the lower side of the water tub 11 to discharge water to the outside.

A drive motor 17 mounted in the lower region of the housing 10 supplies a driving force to the drum 12 to cause it to rotate. The drum 12 has a circumferential wall with a plurality of through-holes 12a therethrough for the inflow and outflow of water. A plurality of lifters 12b protrude inwardly from an inner surface of the rotating tub 12 to lift laundry in the rotating tub 12 and thereby wash the laundry by virtue of the impact applied to the laundry as the laundry falls.

The drum-type washing machine further includes a damper unit 20 to support the water tub 11 and act as a shock absorber to reduce vibration generated in the water tub 11 as the drum 12 rotates.

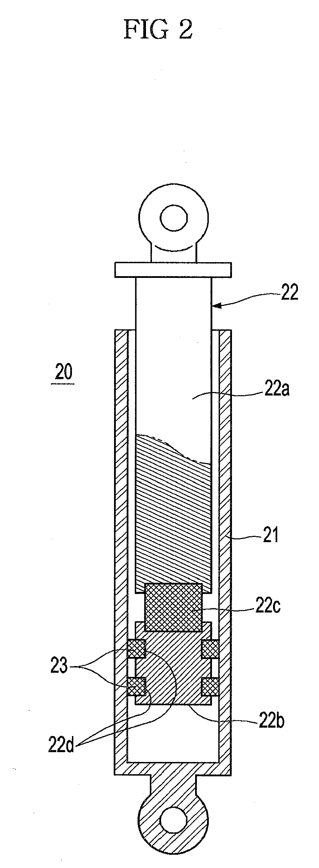

Referring to Figure 2, the damper unit 20 comprises a hollow cylinder 21 having one end attached to a bottom surface of the housing 10 and a piston 22 having one end affixed to a lower portion of an outer surface of the water tub 11 and the other end reciprocably received in the cylinder 21. The damper unit 20 also includes a frictional pad 23 disposed around the piston 22 to come into frictional contact with the inner surface of the cylinder 21 as the piston 22 reciprocates in the cylinder 21. The frictional pads 23 thereby act to convert the vibrational force applied to the piston 22 transmitted from the water tub 11 into heat, and thereby absorbs the vibration.

In the first embodiment of the present invention, the piston 22 is variable in length in an elastic manner. When a low degree of vibration is transmitted from the water tub 11 to the piston 22, the piston 22 is elastically contracted and so the vibration is sufficiently reduced. The action of a frictional force between the frictional pad 23 and the inner surface of the cylinder 21 is not required. Thus, transmission of the vibration to the outside is reduced.

To achieve such an elastically retractable configuration, the piston 22 includes a first rod 22a having one end hingedly attached to the water tub 11 and an opposite end inserted in the cylinder 21. A second rod 22b is disposed in the cylinder 21 and an elastic member 22c is positioned between the first rod 22a and the second rod 22b so as to connect the first and second rods 22a,22b. The second rod 22b is therefore moveable upon receiving a force from the first rod 22a. The elastic member 22c is made of an elastically deformable material and configured to absorb part of the force transmitted from the first rod 22a and transmit the remaining force to the second rod 22b, thereby causing the second rod 22b to reciprocate inside the cylinder 21.

In one embodiment a pair of frictional pads 23 are axially arranged in parallel around the second rod 22b. The second rod 22b may have a pair of grooves 22d for the insertion of the frictional pads 23.

According to the first embodiment of the damper unit 20, the vibrational force applied to the piston 22 is completely absorbed if the force is less than the absorbing power of the elastic member 22c as the elastic member 22c is elastically deformed, i.e. contracted and expanded, thereby reducing the vibration of the water tub 11. When the vibration of the water tub 11 causes a force greater than the absorbing power of the elastic member 22c to be applied to the piston 22 however, only part of the force is absorbed as the elastic member 22c is elastically deformed, i.e. contracted and expanded. The remaining force is absorbed due to movement of the frictional pad 23 disposed around the second rod 22b relative to the cylinder 21 as the frictional pad is in frictional contact with the inner surface of the cylinder 21.

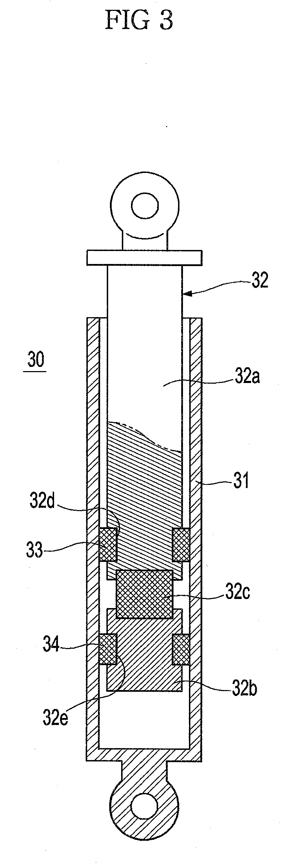

A second embodiment of the damper unit designated as reference numeral 30 is shown in Figure 3 and comprises a hollow cylinder 31 having one end affixed to the bottom surface of the housing 10, a piston 32 having one end affixed to a lower location of the outer surface of the water tub 11 and the other end reciprocably received in the cylinder 31. Frictional pads 33 and 34 are arranged around the piston 32 so as to come into frictional contact with the inner surface of the cylinder 31 as the piston 32 moves reciprocally in the cylinder 31 such that a force applied to the piston 32 due to the vibration of the water tub 11 is converted into heat, thereby enabling reduction of the vibration.

The piston 32 comprises a first rod 32a having one end hingedly attached to the water tub 11 and the other end receives the cylinder 31. A second rod 32b is disposed in the cylinder 31 and can move reciprocally upon receiving a force from the first rod 32a. An elastic member 32c, made of an elastically deformable material, is interposed between the first rod 32a and the second rod 32b so as to connect them to each other, and is configured to absorb part of the force transmitted from the first rod 32a and transmit the remaining force to the second rod 32b, such that the second rod 32b reciprocates inside the cylinder 31.

In this embodiment, the frictional pads 33 and 34 comprise a first frictional pad 33 positioned around the first rod 32a and a second frictional pad 34 positioned around the second rod 32b. The first and second rod 32a and 32b have first and second grooves 32d and 32e, respectively, for the insertion of the first and second frictional pads 33 and 34.

Accordingly, when a force is applied to the piston 32 which is less than the sum of the frictional force acting between the first and second frictional pads 33 and 34 and the inner surface of the cylinder 31 and the absorbing power of the elastic member 32c then part of the force is absorbed due to the first frictional pad 33, affixed on the first rod 32a moving along in the cylinder 31, coming in frictional contact with the inner surface of the cylinder 31. The remaining force is absorbed as the elastic member 22c is elastically deformed, i.e. contracted and expanded.

When a force is applied to the piston 32 which is greater than the sum of a frictional force acting between the first and second frictional pads 33 and 34 and the inner surface of the cylinder 31 and the absorbing power of the elastic member 32c, however, part of the force is absorbed as the elastic member 32c is elastically deformed, i.e. contracted and expanded, and the remaining force is absorbed as the frictional pads 33 and 34 move within the cylinder 31 coming into frictional contact with the inner surface of the cylinder 31.

While the second embodiment included a first groove 32d for the insertion of the first frictional pad 33 recessed in an outer surface of the first rod 32a of the piston 32, the third embodiment includes a first groove 41a for the insertion of a first frictional pad 43 recessed in an inner surface of the cylinder 41. In this case, an inner surface of the first frictional pad 43 comes into frictional contact with an outer surface of a first rod 42a of a piston 42, enabling reduction of the vibration. The third embodiment can also include a second rod 42b having a groove 42d for a second frictional pad 44.

According to aspects of the present invention, if a relatively low degree of vibration is applied to the damper unit, the vibration can be reduced simply as the piston is elastically contracted and expanded without assistance of frictional pads configured to come into frictional contact with the inner surface of a cylinder or the outer surface of the piston. Such a configuration enables a more effective reduction of the vibration transmitted from a water tub to the piston.

Although embodiments of the invention have been shown and described, it would be appreciated by those skilled in the art that these are preferred embodiments only and changes may be made to these embodiments without departing from the principles of the invention, the scope of which is defined in the claims and their equivalents and the foregoing description should be regarded as a description of a preferred embodiment only.

## Claims

1. A washing machine comprising a housing, a tub suspended within the housing and a damper disposed between the housing and the tub and including a piston slidable within a cylinder to absorb vibration of the tub, **characterised in that** the piston includes a first portion and, a second portion connected to a remote end of the first portion within the cylinder by an elastic member such that at least some vibration of the tub is absorbed by the elastic member prior to movement of the second portion of the piston within the cylinder.

2. A washing machine according to claim 1, wherein at least one frictional element is disposed between the second portion of the piston and the cylinder.

3. A washing machine according to claim 2, wherein the second portion of the piston has at least one groove therein to receive the frictional element.

4. A washing machine according to claim 2 or claim 3, wherein the frictional element is annular.

5. A washing machine according to any preceding claim wherein at least one frictional element is disposed between the first portion of the piston and the cylinder.

6. A drum-type washing machine comprising a housing, a water tub suspendedly mounted in the housing and a damper unit having one end affixed to an outer surface of the water tub and an other end affixed to the housing reducing vibration of the water tub, the damper unit comprising a cylinder having one end affixed to one of the housing and the water tub and an other end having an opening, a piston having one end affixed to the other one of the housing and the water tub and an other end reciprocably received in the cylinder and retractable, and a frictional pad on an inner surface of the cylinder or an outer surface of the piston coming in frictional contact, respectively, with the outer surface of the piston or the inner surface of the cylinder reducing vibration transmitted from the water tub to the piston.

7. The washing machine according to claim 6 wherein the piston comprises:
a first rod having one end affixed to one of the housing and the water tub and an other end within the cylinder, and a second rod in the cylinder and connected to the first rod by an elastic member.

8. The washing machine according to claim 7 wherein the second rod has a groove recessed in an outer surface thereof for the positioning of the frictional pad.

9. The washing machine according to claim 7 wherein the frictional pad is a plurality of frictional pads and comprises a first frictional pad interposed between the inner surface of the cylinder and an outer surface of the first rod, and a second frictional pad interposed between the inner surface of the cylinder and an outer surface of the second rod.

10. The washing machine according to claim 9 wherein the first rod has a first groove recessed in the outer surface thereof for the positioning of the first frictional pad, and the second rod has a second groove recessed in the outer surface thereof for the positioning of the second frictional pad.

11. The washing machine according to claim 9 wherein the cylinder has a first groove recessed in the inner surface thereof for the positioning of the first frictional pad, and the second rod has a second groove recessed in the outer surface thereof for the positioning of the second frictional pad.

12. A drum-type washing machine comprising a housing a water tub mounted in the housing and a damper unit having one end affixed to an outer surface of the water tub and the other end affixed to the housing reducing vibration of the water tub, the damper unit comprising a cylinder having one end affixed to one of the housing and the water tub and the other end having an opening, a first rod having one end affixed to the other one of the housing and the water tub and the other end reciprocably received in the cylinder a second rod received in the cylinder and connected to the first rod by an elastic member and a plurality of frictional pads between an inner surface of the cylinder and an outer surface of at least one of the first and second rods and configured to come in frictional contact with an inner surface of the cylinder reducing the vibration transmitted from the water tub to the piston.

13. A washing machine comprising a housing a water tub mounted in the housing and a damper having one end affixed to an outer surface of the water tub and an other end affixed to the housing, the damper unit comprising a cylinder having one end affixed to one of the housing and the water tub, a piston having one end affixed to the other one of the housing and the water tub and an other end within the cylinder, the piston comprising a first rod having one end affixed to one of the housing and the water tub and the other end within the cylinder, and a second rod in the cylinder and connected to the first rod by an elastic member, and a frictional pad on an inner surface of the cylinder or an outer surface of the piston positioned to come in frictional contact with the outer surface of the piston or the inner surface of the cylinder, respectively.

14. The washing machine according to claim 13 wherein the second rod has a groove.

15. The washing machine according to claim 13 wherein the frictional pad is a plurality of frictional pads and comprises a first frictional pad positioned between the inner surface of the cylinder and an outer surface of the first rod, and a second frictional pad between the inner surface of the cylinder and an outer surface of the second rod.

16. The washing machine according to claim 15 wherein the first rod has a first groove in the outer surface, and the second rod has a second groove in the outer surface thereof.

17. The washing machine according to claim 15 wherein the cylinder has a first groove in the inner surface thereof, and the second rod has a second groove in the outer surface thereof.

18. A method of reducing vibration in a washing machine, the method comprising absorbing a first value of vibration by elastic deformation of an elastic member and absorbing a second value of vibration by the elastic deformation of the elastic member and by friction between surfaces.

19. The method of reducing vibration in a washing machine according to claim 18 wherein the second value of vibration is greater than the first value of vibration.

20. A damper comprising a cylinder having one end affixable to one of a housing and a movable part within the housing, a piston having one end affixed to the other one of the housing and the movable part and an other end within the cylinder, the piston comprising a first rod having one end affixed to one of the housing and the movable part and the other end within the cylinder, and a second rod in the cylinder and connected to the first rod by an elastic member and a frictional pad positioned on an inner surface of the cylinder or an outer surface of the piston positioned to come in frictional contact with the outer surface of the piston or the inner surface of the cylinder, respectively.

21. The damper according to claim 20 wherein the second rod has a groove.

22. The damper according to claim 20 wherein the frictional pad is a plurality of frictional pads and comprises a first frictional pad positioned between the inner surface of the cylinder and an outer surface of the first rod, and a second frictional pad between the inner surface of the cylinder and an outer surface of the second rod.

23. The damper according to claim 20 wherein the first rod has a first groove in the outer surface thereof, and the second rod has a second groove in the outer surface thereof.

24. The damper according to claim 20 wherein the cylinder has a first groove in the inner surface thereof, and the second rod has a second groove in the outer surface.
